# EUROPEAN PATENT APPLICATION

(11) **EP 4 786 770 A1**
(43) Date of publication of application: **05.08.2026**
(21) Application number: 26155160.0
(22) Date of filing: 29.01.2026
(51) Int. Cl.: F02C 7/36, B64D 31/18, B64D 35/025, F02K 5/00

(54) **GEARBOX WITH INTEGRATED MECHANICAL DISCONNECT**

(30) Priority: 30.01.2025 US 202519041622
(71) Applicant: Pratt & Whitney Canada Corp., (01BE5) Longueuil, QC J4G 1A1 (CA)
(72) Inventor: ABDELNOUR, Michel, Greenfield Park (CA); BRITO, Roberto, Beloeil (CA); FINKE, Aaron M., Janesville (US); VIEIRA DE SOUZA, Carlos Eduardo, Huntley (US)
(74) Representative: Dehns

(57) **Abstract**

A hybrid-electric propulsion system (24) for an aircraft is provided that includes a thermal engine, an electric motor (28), a propulsion unit (32), a gearbox (22), and an electric motor disconnect system (52). The gearbox has a housing (46) and is configured to receive a first rotational drive input from the thermal engine and a second rotational drive input from the electric motor. The gearbox is also configured to transfer an output rotational drive to the propulsion unit. The electric motor disconnect system is disposed within the housing of the gearbox. The electric motor disconnect system is disposable in a connected state wherein the electric motor is engaged with the gearbox to provide the second rotational drive input to the gearbox, and disposable in a disconnected state wherein the electric motor is disengaged from providing the second rotational drive input to the gearbox.

## Description

### BACKGROUND OF THE INVENTION

### 1. Technical Field

The present disclosure relates generally to hybrid-electric propulsion (HEP) systems for aircraft in general and to mechanisms for selectively disconnecting an electrical motor from a HEP system in particular.

### 2. Background Information

Hybrid-electric propulsion systems utilizing a thermal engine and permanent magnet (PM) type electric motor, both supplying torque to the same gearbox, require a mechanical disconnect that allows the electric motor to be decoupled from the gearbox in the event of a failure condition; e.g., high voltage arcing. A mechanical disconnect can be integrated into the electric motor, where the mechanical disconnect can utilize the lubrication system of the electric motor. An integrated electric motor / disconnect package, however, generally undesirably extends the length of the electric motor and increases the complexity and cost of the electric motor. It would be useful to have a system with a mechanical disconnect for an electric motor that overcomes the disadvantages of existing systems.

### SUMMARY

According to an aspect of the present disclosure, a hybrid-electric propulsion system for an aircraft is provided that includes a thermal engine, an electric motor, a propulsion unit, a gearbox, and an electric motor disconnect system. The gearbox has a housing and is configured to receive a first rotational drive input from the thermal engine and a second rotational drive input from the electric motor. The gearbox is also configured to transfer an output rotational drive to the propulsion unit. The electric motor disconnect system is disposed within the housing of the gearbox. The electric motor disconnect system is disposable in a connected state wherein the electric motor is engaged with the gearbox to provide the second rotational drive input to the gearbox, and disposable in a disconnected state wherein the electric motor is disengaged from providing the second rotational drive input to the gearbox.

In any of the aspects or embodiments described above and herein, the thermal engine may be a gas turbine engine.

In any of the aspects or embodiments described above and herein, the gearbox may be a reduction gearbox.

In any of the aspects or embodiments described above and herein, the thermal engine and the electric motor may be disposed in a parallel configuration.

In any of the aspects or embodiments described above and herein, the gearbox may include an offset gear drive and the electric motor disconnect system may be engaged with the offset gear drive.

In any of the aspects or embodiments described above and herein, the electric motor disconnect system may include a clutch that is disposable in a clutch engaged configuration and a clutch disengaged configuration.

In any of the aspects or embodiments described above and herein, the electric motor disconnect system may include an engagement shaft, wherein a motor shaft of the electric motor and the engagement shaft are connected to the clutch. The electric motor disconnect system may be configured such that linear translation of the engagement shaft changes the clutch from the clutch engaged configuration to the clutch disengaged configuration.

In any of the aspects or embodiments described above and herein, the engagement shaft may be biased toward the clutch engaged configuration.

In any of the aspects or embodiments described above and herein, the electric motor disconnect system may include an engagement shaft spring, and the electric motor disconnect system may be configured such that the engagement shaft spring biases the engagement shaft toward the clutch engaged configuration.

In any of the aspects or embodiments described above and herein, the electric motor disconnect system may include an input shaft having an axially extending central bore, and the engagement shaft may be received within the central bore, and a spline arrangement may mechanically couple the engagement shaft and the input shaft and allow axial travel of the engagement shaft relative to the input shaft.

In any of the aspects or embodiments described above and herein, the electric motor disconnect system may include a disconnect actuator disposable in a retracted state or in a deployed state, and in the deployed state the disconnect actuator may be configured to cause the engagement shaft to axially translate.

In any of the aspects or embodiments described above and herein, in the deployed state the disconnect actuator may engage with a ramp attached to the engagement shaft.

In any of the aspects or embodiments described above and herein, the disconnect actuator may include a solenoid that is controllable to actuate the disconnect actuator from the retracted state to the deployed state.

In any of the aspects or embodiments described above and herein, wherein the system may include a controller in communication with the electric motor, the electric motor disconnect system, and a non-transitory memory storing instructions. The instructions when executed may cause the controller to: monitor electric motor operation; and control the disconnect actuator of the electric motor disconnect system to actuate to a deployed state in the event the electric motor operation monitoring identifies an abnormal event occurrence.

In any of the aspects or embodiments described above and herein, the system may include a lubrication system that cycles a flow of fluid lubricant through the gearbox, and the flow of fluid lubricant may be in communication with the electric motor disconnect system disposed within the housing of the gearbox.

According to an aspect of the present disclosure, a hybrid-electric propulsion system for an aircraft is provided that includes a thermal engine, an electric motor, a gearbox, and an electric motor disconnect system. The electric motor has a motor shaft. The gearbox has a housing, and is configured to receive a rotational drive input from the electric motor. The electric motor disconnect system is disposed within the housing of the gearbox. The electric motor disconnect system is disposable in a connected state or in a disconnected state. In the connected state, the electric motor is engaged with the gearbox to provide the rotational drive input to thermal engine via the gearbox. In the disconnected state, the electric motor is disengaged from providing the rotational drive input to the thermal engine.

In any of the aspects or embodiments described above and herein, the electric motor disconnect system may include a clutch, an input shaft, and an engagement shaft. The clutch may be disposable in a clutch engaged configuration and a clutch disengaged configuration. The input shaft may have an axially extending central bore and the engagement shaft may be received within the central bore. The motor shaft of the electric motor and the engagement shaft may be connected to the clutch. The electric motor disconnect system may be configured such that linear translation of the engagement shaft changes the clutch from the clutch engaged configuration to the clutch disengaged configuration.

In any of the aspects or embodiments described above and herein, the thermal engine may be a gas turbine engine, and the gearbox may be an accessory gearbox in drive communication with an engine shaft of the gas turbine engine via a tower shaft.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 diagrammatically illustrates an example of a hybrid-electric propulsion system according to the present disclosure.
FIG. 2 diagrammatically illustrates an example of a thermal engine in the form of a gas turbine engine that may be used as part of the present disclosure.
FIG. 3 is an enlarged view of a portion of the hybrid-electric propulsion system shown in FIG. 1, illustrating the eMotor disconnect system in a connected state.
FIG. 3A is an enlarged view of a portion of the hybrid-electric propulsion system shown in FIG. 1, illustrating the eMotor disconnect system in a disconnected state.
FIG. 4 diagrammatically illustrates an example of a hybrid-electric propulsion system according to the present disclosure.
FIG. 5 diagrammatically illustrates an example of a hybrid-electric propulsion system according to the present disclosure.
FIG. 6 diagrammatically illustrates an example of a hybrid-electric propulsion system according to the present disclosure.
FIG. 7 diagrammatically illustrates an example of a hybrid-electric propulsion system according to the present disclosure.

### DETAILED DESCRIPTION

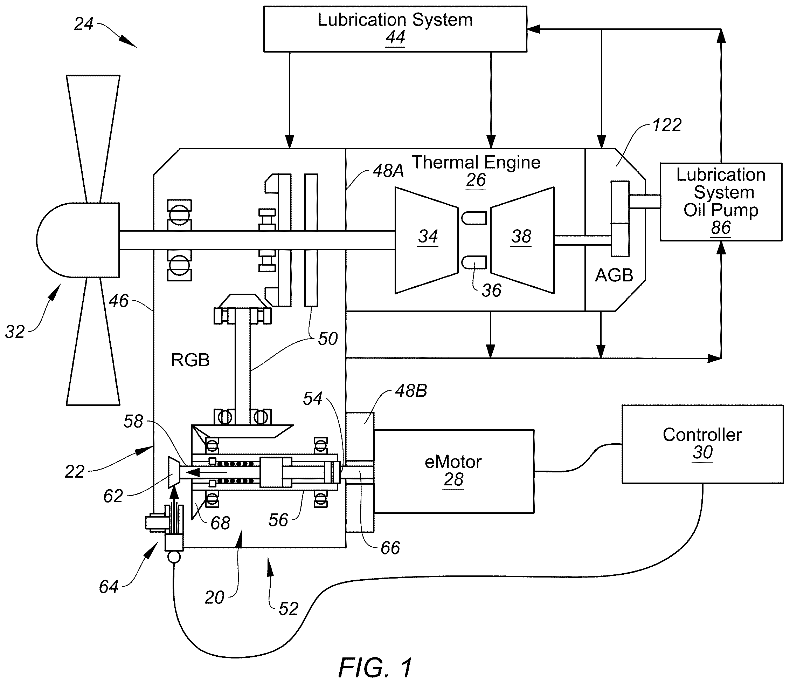

Referring to FIG. 1, the present disclosure is directed to an electric motor ("eMotor") disconnect system 20 disposed within a gearbox 22, that is part of a hybrid-electric propulsion (HEP) system 24. The HEP system 24 includes a thermal engine (e.g., a gas turbine engine 26), an electric motor ("eMotor 28"), and a gearbox 22. In some embodiments, the HEP system 24 may further include a controller 30 and/or a propulsion unit 32. The HEP system 24 may be used to power a variety of different types of aircraft; e.g., manned and unmanned.

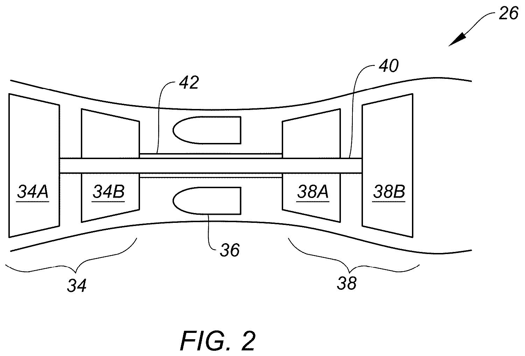

FIG. 2 diagrammatically illustrates a gas turbine engine 26 having a compressor section 34, a combustion section 36, and a turbine section 38. The compressor section 34 includes a low pressure compressor 34A and a high pressure compressor 34B. The turbine section 38 includes a high pressure turbine 38A and a low pressure turbine 38B. The low pressure turbine 38B is connected to low pressure compressor 34A by a low pressure shaft 40 and the high pressure turbine 38A is connected to high pressure compressor 34B by a high pressure shaft 42. Air drawn into the compressor section 34 is compressed and passed to the combustion section 36. Fuel is added to the compressed air flow and is combusted within the combustion section 36. The combustion products and any residual air are passed to the turbine section 38, powering the turbine section 38. The turbine section 38, in turn, provides motive force to drive the compressor section 34 and motive force to drive a propulsion unit 32. The present disclosure is not limited to use with any particular gas turbine engine 26 configuration; e.g., the present disclosure may be utilized with turboshaft engines, turboprop engines, turbofan engines, and the like. The term "reduction gear box" is used herein to refer to a gear box that is configured to receive a rotational drive input at a first rotational speed and first torque, and produce a rotational drive output at a second rotational speed and second torque, wherein the first rotational speed is greater than the second rotational speed, and the second torque is greater than the first torque.

The HEP system 24 according to the present disclosure may utilize a variety of different eMotor 28 types. For example, a permanent magnet type eMotor 28 may be used within the present disclosure to rotationally drive a component. In some embodiments, an inverter (not shown) configured to transform electrical energy from a battery into a form usable by the eMotor 28 and to control the speed of the eMotor 28 by controlling voltage and frequency may be included. The present disclosure is not limited to any particular inverter configuration or eMotor control configuration.

The propulsion unit 32 may be configured to provide thrust (or power) and/or lift to the aircraft. An example of a propulsion unit 32 that may be used to provide power for a fixed-wing aircraft is a propeller system. An example of a propulsion unit 32 that may be used to provide thrust for a fixed-wing aircraft is a turbofan system. An example of a propulsion unit 32 that may be used to produce lift for an aircraft (e.g., a rotary aircraft such as a helicopter) is a rotor system. The present disclosure is not limited to any particular type of propulsion unit 32.

The term "controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the present disclosure system (or a system component) to accomplish the same algorithmically and/or coordination of system components. The controller 30 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 30 may be an independent component or it may be integrated within another controller present with the HEP system 24 and that controller may be configured to perform the functionality detailed herein. The present disclosure is not limited to any particular controller architecture unless specifically stated herein.

As will be detailed herein, the present disclosure may be implemented with several different gearbox 22 configurations, including but not limited to reduction gearboxes, accessory gearboxes and the like. Some gearboxes 22 utilized with the present disclosure are configured to accept a first rotational drive from a gas turbine engine 26 and a second rotational drive input from an electric motor, and convert those rotational drive inputs into an output rotational drive. The output rotational drive may be used to drive a propulsion unit 32. Some gearboxes 22 utilized with the present disclosure are configured to accept an input rotational drive from an eMotor 28 and produce an output rotational drive that assists a gas turbine engine 26. The gas turbine engine 26, in turn, may be configured to drive a propulsion unit 32.

Specific examples of the present disclosure eMotor disconnect system 52 implemented within a gearbox 22 are provided hereinafter to illustrate the utility of the present disclosure.

FIG. 1 diagrammatically illustrates an example of a hybrid-electric propulsion (HEP) system that includes a gas turbine engine 26, an eMotor 28, a reduction gear box (RGB) 22, a propulsion unit 32, an accessory gearbox 122, a lubrication system 44, an eMotor disconnect system 52, and a controller 30. The gas turbine engine 26, eMotor 28, propulsion unit 32, and controller 30 may be configured as described heretofore.

The RGB 22 in this embodiment includes a housing 46, a first pad 48A for input engagement with the gas turbine engine 26, a second pad 48B for input engagement with the eMotor 28, and a gearing system 50 disposed within the housing 46. The RGB 22 has a parallel configuration that accepts a first rotational input drive from the gas turbine engine 26 and accepts a second rotational input drive from the eMotor 28, and produces a rotational output drive. The RGB 22 is in communication with the lubrication system 44 that cycles a fluid lubricant through the RGB 22 to lubricate and/or cool componentry within the RGB 22.

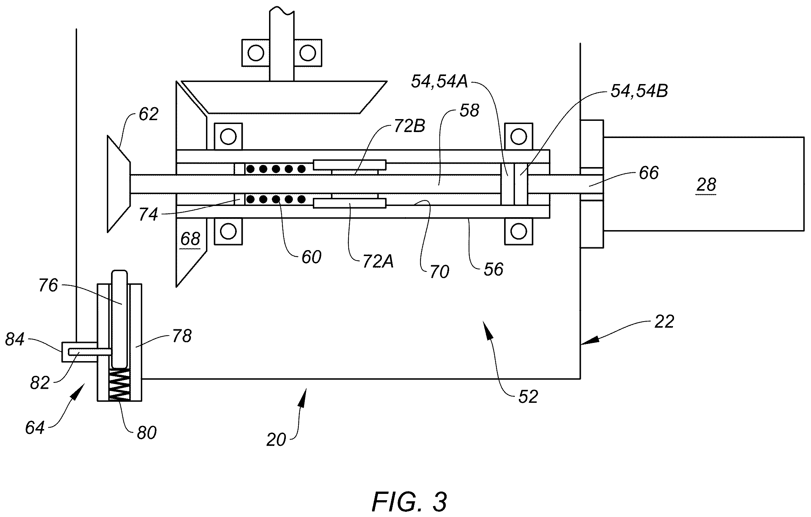

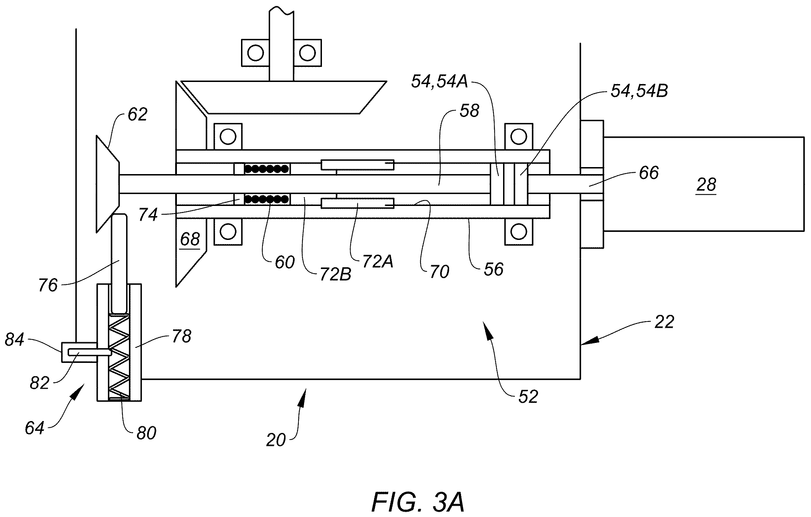

The eMotor disconnect system 52 is mounted within the RGB 22. The eMotor disconnect system 52 embodiment shown in FIGS. 1, 3, and 3A includes a clutch 54, an RGB input shaft 56, an engagement shaft 58, an engagement shaft spring 60, an actuator ramp 62, and a disconnect actuator 64. A motor shaft 66 of the eMotor 28 extends into the RGB 22 and is in communication with the clutch 54.

The RGB input shaft 56 extends axially between a first end and an opposite second end. A gear 68 (e.g., a bevel gear) is attached to the second end of the RGB input shaft 56. The gear 68 is engaged with a mating gear attached to an RBG gear shaft, which is ultimately in communication with the output of the RGB. The RGB input shaft 56 includes a central bore 70 (e.g., see FIG. 3) that extends between the first and second ends of the input shaft 56. A segment of the central bore 70 is configured with a first half 72A of a mating spline arrangement.

The engagement shaft 58 is received within the RGB input shaft central bore 70, and extends axially between a clutch end and a ramp end. The engagement shaft 58 includes a second half 72B of the mating spline arrangement. When the engagement shaft 58 is received within the central bore 70, the first and second halves 72A, 72B of the mating spline arrangement are engaged with one another. The spline engagement allows axial travel of the engagement shaft 58 relative to the RGB input shaft 56, while maintaining mechanical engagement between the engagement shaft 58 and the RGB input shaft 56.

The actuator ramp 62 is attached to the ramp end of the engagement shaft 58. The actuator ramp 62 is configured for engagement with the disconnect actuator 64 in a manner that causes the engagement shaft 58 to travel axially in a first axial direction (e.g., in a direction that causes clutch disengagement) in response to contact with the disconnect actuator 64. The actuator ramp 62 diagrammatically shown in FIGS. 3 and 3A has a trapezoidal shape.

The eMotor disconnect system 52 may include an engagement shaft spring 60 that is configured to bias the engagement shaft 58 in a second axial direction to maintain clutch engagement. The engagement shaft spring 60 acts between the RGB input shaft 56 and the engagement shaft 58 to bias the engagement shaft 58 in the second axial direction. For example, the engagement shaft spring 60 may act between a mechanical stop (e.g., a retainer ring 74 - see FIG. 3) engaged with the RGB input shaft central bore 70 and a surface of the engagement shaft 58; e.g., a surface associated with the second half 72B of the mating spline arrangement. The engagement shaft spring 60 has a spring rate that represents the amount of force needed to compress the spring 60 a predetermined distance. Hence, biasing force produced by the engagement shaft spring 60 is a function of the amount that the spring 60 is compressed.

The clutch 54 may be any type of device that that can be disposed in an engaged configuration and a disengaged configuration. In the clutch engaged configuration, the engagement shaft 58 and the eMotor motor shaft 66 are coupled; e.g., rotation of the eMotor motor shaft 66 causes rotation of the engagement shaft 58. In the clutch engaged configuration, the eMotor disconnect system 52 may be described as being in a connected state. In the clutch disengaged configuration, the engagement shaft 58 and the eMotor motor shaft 66 are not coupled; e.g., the eMotor motor shaft 66 and the engagement shaft 58 are each free to rotate relative to the other, or one may be stationary and the other rotating. In the clutch disengaged configuration, the eMotor disconnect system 52 may be described as being in a disconnected state. A dog tooth type clutch is a non-limiting example of a clutch 54 that may be used. FIGS. 3 and 3A diagrammatically illustrates the clutch 54 having a first clutch member 54A and a second clutch member 54B. In the engaged configuration (e.g., as shown in FIGS. 1 and 3), the first and second clutch members 54A, 54B are joined to permit rotational drive from the eMotor 28 to be transferred to the RGB 22 via the engagement shaft 58. In the disengaged configuration (e.g., as shown in FIG. 3A), the first and second clutch members 54A, 54B are separated from one another. As a result, rotational drive from the eMotor 28 is not transferred to the RGB 22 and the engagement shaft 58 / RGB input shaft 56 are free to rotate relative to the eMotor motor shaft 66 and vice versa.

The disconnect actuator 64 is configured to be disposed in a retracted state or in a deployed state. In the retracted state, the disconnect actuator 64 is not engaged with the actuator ramp 62 attached to the engagement shaft 58. In the deployed state, the disconnect actuator 64 is engaged with the actuator ramp 62 attached to the engagement shaft 58 and will cause the engagement shaft 58 to travel axially.

A nonlimiting example of a disconnect actuator 64 is diagrammatically shown in FIGS. 3 and 3A includes a rod 76, a housing 78, a biasing spring 80, a retaining pin 82, and a solenoid 84. The rod 76 is disposed for axial travel relative to the housing 78. The biasing spring 80 is engaged with the rod 76 and is configured to apply a biasing force that directs the rod 76 toward the actuator ramp 62. The retaining pin 82 is engaged with the solenoid 84. The solenoid 84 is controllable to maintain engagement of the retaining pin 82 with the rod 76, thereby maintaining the disconnect actuator 64 in the retracted state, or to disengage the retaining pin 82 from the rod 76, thereby allowing the disconnect actuator 64 to transition to the deployed state. The present disclosure is not limited to the disconnect actuator 64 example shown in FIGS. 3 and 3A.

Referring to FIG. 1, the HEP system 24 accessory gearbox 122 (AGB) is mounted relative to the gas turbine engine 26 and is driven off of engine 26. The lubrication system 44 may include an oil pump 86 driven off the AGB 122, operating to cycle fluid lubricant to HEP system 24 components such as the RGB 22. In some embodiments, the lubrication system 44 may also cycle fluid lubricant to other HEP system 24 components such as the gas turbine engine 26 and the AGB 122.

During operation of the HEP system 24, the gas turbine engine 26 and the eMotor 28 may be controlled by the controller 30 to provide rotational drive to the RGB, which in turn provides rotational drive to the propulsion unit 32. It should be noted that the present disclosure does not require an independent controller to perform the functionality described herein. The functionality associated with the present disclosure may be performed by one or more controllers associated the HEP system 24.

During operation of the HEP system 24 when the eMotor 28 is controlled to produce rotational drive input into the RGB 22, the clutch 54 of the eMotor disconnect system 52 is disposed in a clutch engaged configuration; e.g., see FIGS. 1 and 3. In the clutch engaged configuration, the engagement shaft 58 and the eMotor motor shaft 66 are coupled and rotation of the eMotor motor shaft 66 causes rotation of the engagement shaft 58. In this operational mode, the first and second halves 72A, 72B of the mating spline arrangement are engaged with one another, and the lubrication system 44 may cycle a flow of fluid lubricant through the RGB 22 that provides lubrication and/or cooling to the eMotor disconnect system 52. As can be seen in FIG. 3, in this operational mode the engagement shaft spring 60 may be disposed in a first state of compression. In the first state of compression, the engagement shaft spring 60 may be partially compressed but is not fully compressed.

In the event that an abnormal event or condition occurs regarding the operation of the eMotor 28, it may be desirable to mechanically disconnect the eMotor 28 from the RGB 22. A signal from a sensor or logic sensing the abnormal event or condition may be passed to the controller 30. Once the logic stored within the memory of the controller 30 determines a mechanical disconnect of the eMotor 28 is desirable, a signal may be sent from the controller 30 to the disconnect actuator 64. The signal may command the disconnect actuator 64 to actuate from the retracted state to the deployed state. As indicated above, in the retracted state, the disconnect actuator 64 is not engaged with the actuator ramp 62. Specifically, the solenoid 84 is controlled to maintain engagement of the retaining pin 82 with the rod 76, thereby maintaining the disconnect actuator 64 in the retracted state. To transition from the retracted state to the deployed state, the solenoid 84 is controlled to disengage the retaining pin 82 from the rod 76. Once the rod 76 is free of the retaining pin 82, the spring force produced by the biasing spring 80 forces the rod 76 to linearly translate toward and into contact with the actuator ramp 62. The force of the rod 76 against the actuator ramp 62 causes the engagement shaft 58 to linearly translate.

The linear translation of the engagement shaft 58 caused by the disconnect actuator 64 is resisted by the engagement shaft spring 60, causing the engagement shaft spring 60 to compress; e.g., to a second state of compression wherein the engagement shaft spring 60 is more compressed than in the first state of compression shown in FIG. 3. During the linear translation of the engagement shaft 58, the first and second halves 72A, 72B of the mating spline arrangement (and therefore the engagement shaft 58 and the RGB input shaft 56) remain engaged with one another. The linear translation of the engagement shaft 58 also causes the clutch 54 to transition from the clutch engaged configuration (e.g., see FIGS. 1 and 3) to the clutch disengaged configuration (e.g., see FIG. 3A), wherein the eMotor motor shaft 66 and the engagement shaft 58 are each free to rotate relative to the other.

Once the abnormal event or condition is addressed, the disconnect actuator 64 can be returned to the retracted state where it is no longer engaged with the actuator ramp 62 and the engagement shaft 58. With the disconnect actuator 64 in the retracted state, the biasing force produced by the engagement shaft spring 60 causes the engagement shaft 58 to linearly translate in the direction that allows the clutch 54 to return to a clutch engaged configuration.

The present disclosure provides an improved structure for mechanically disconnecting the eMotor 28 from the RGB, one that is space efficient, and one that can leverage the lubrication system of the RGB.

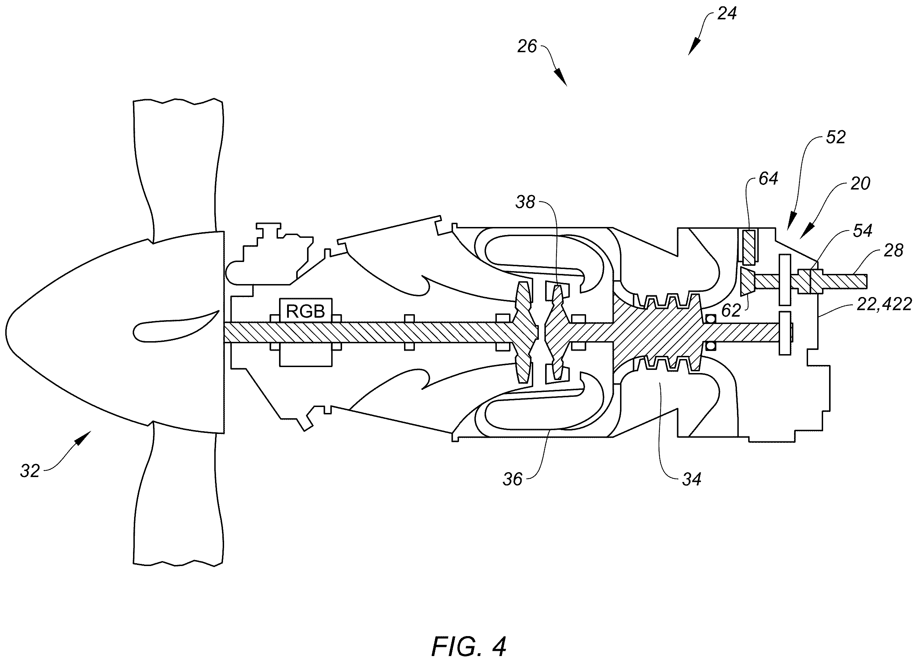

As stated above, the present disclosure motor disconnect system 20 may be utilized within a variety of different gearbox 22 embodiments, and is not therefore limited to the example described above and shown in FIGS. 1, 3, and 3A. FIG. 4, for example, diagrammatically illustrates an embodiment of the present disclosure implemented in an accessory gearbox 422 that is engaged with a reverse flow gas turbine engine 26. In this embodiment, the accessory gearbox 422 includes an offset gear drive configured to accept rotational drive from an eMotor 28 mounted to the accessory gearbox 422. An embodiment of the present disclosure eMotor disconnect system 52 is disposed to connect or disconnect the eMotor 28 in the manner described above regarding the system shown in FIGS. 1, 3, and 3A.

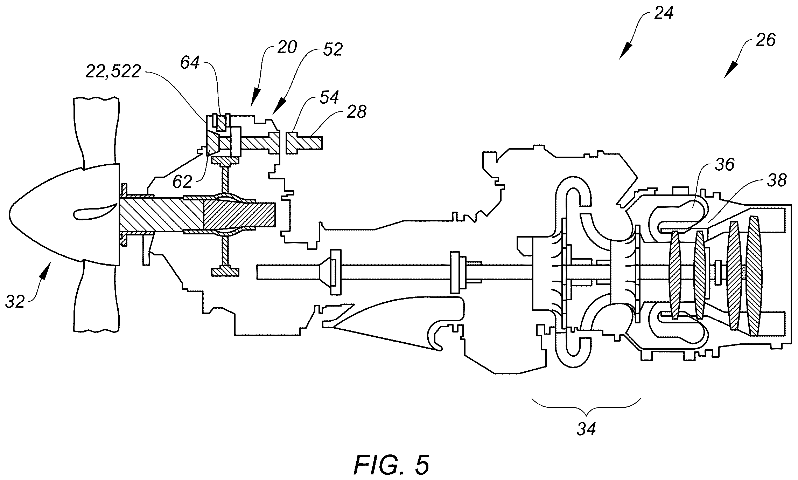

FIG. 5 diagrammatically illustrates another embodiment of the present disclosure implemented in a reduction gearbox 22 that is engaged with a gas turbine engine 26. In this embodiment, the reduction gearbox 522 includes an offset gear drive configured to accept rotational drive from an eMotor 28 mounted to the reduction gearbox 522. An embodiment of the present disclosure eMotor disconnect system 52 is disposed to connect or disconnect the eMotor 28 in the manner described above regarding the system shown in FIGS. 1, 3, and 3A.

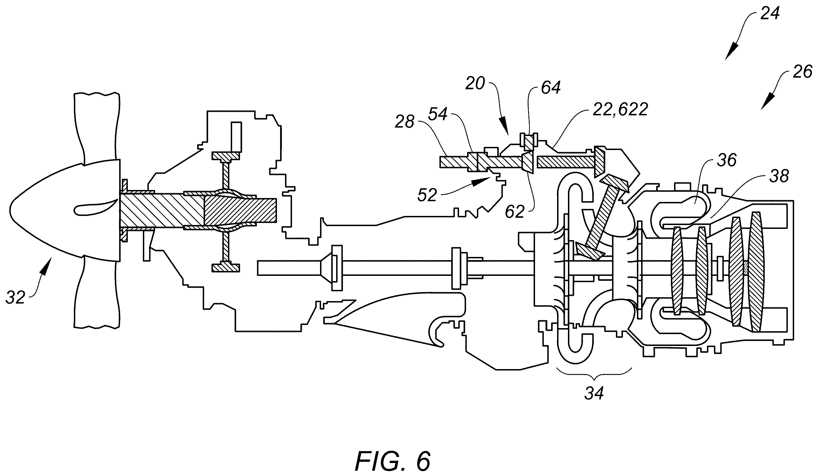

FIG. 6 diagrammatically illustrates another embodiment of the present disclosure implemented in an accessory gearbox 22 that is engaged with a gas turbine engine 26. In this embodiment, the accessory gearbox 622 is in communication with an engine shaft by a tower shaft arrangement and the accessory gearbox 622 is configured to accept rotational drive from an eMotor 28 mounted to the accessory gearbox 622. An embodiment of the present disclosure eMotor disconnect system 52 is disposed to connect or disconnect the eMotor 28 in the manner described above regarding the system shown in FIGS. 1, 3, and 3A.

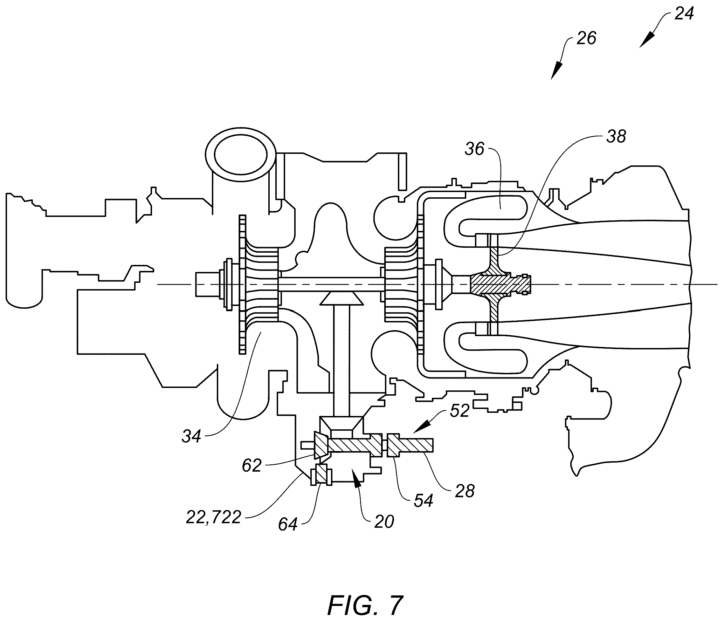

FIG. 7 diagrammatically illustrates another embodiment of the present disclosure implemented in an accessory gearbox 22 that is engaged with a gas turbine engine 26. In this embodiment, the accessory gearbox 722 is in communication with an engine shaft by a tower shaft arrangement and the accessory gearbox 722 is configured to accept rotational drive from an eMotor 28 mounted to the accessory gearbox 722. An embodiment of the present disclosure eMotor disconnect system 52 is disposed to connect or disconnect the eMotor 28 in the manner described above regarding the system shown in FIGS. 1, 3, and 3A.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A hybrid-electric propulsion system for an aircraft, comprising:
a thermal engine;
an electric motor;
a propulsion unit;
a gearbox having a housing, the gearbox configured to receive a first rotational drive input from the thermal engine and a second rotational drive input from the electric motor, and configured to transfer an output rotational drive to the propulsion unit; and
an electric motor disconnect system disposed within the housing of the gearbox;
wherein the electric motor disconnect system is disposable in a connected state wherein the electric motor is engaged with the gearbox to provide the second rotational drive input to the gearbox, and disposable in a disconnected state wherein the electric motor is disengaged from providing the second rotational drive input to the gearbox.

2. The hybrid-electric propulsion system of claim 1, wherein the thermal engine is a gas turbine engine, and / or:
wherein the hybrid-electric propulsion system further comprises a lubrication system that cycles a flow of fluid lubricant through the gearbox; and
wherein the flow of fluid lubricant is in communication with the electric motor disconnect system disposed within the housing of the gearbox.

3. The hybrid-electric propulsion system of claim 1 or 2, wherein the gearbox is a reduction gearbox.

4. The hybrid-electric propulsion system of any preceding claim, wherein the thermal engine and the electric motor are disposed in a parallel configuration, and / or
wherein the gearbox includes an offset gear drive and the electric motor disconnect system is engaged with the offset gear drive.

5. The hybrid-electric propulsion system of any preceding claim, wherein the electric motor disconnect system includes a clutch that is disposable in a clutch engaged configuration and a clutch disengaged configuration.

6. The hybrid-electric propulsion system of claim 5, wherein the electric motor disconnect system includes an engagement shaft, wherein a motor shaft of the electric motor and the engagement shaft are connected to the clutch; and
wherein the electric motor disconnect system is configured such that linear translation of the engagement shaft changes the clutch from the clutch engaged configuration to the clutch disengaged configuration.

7. The hybrid-electric propulsion system of claim 6, wherein the engagement shaft is biased toward the clutch engaged configuration.

8. The hybrid-electric propulsion system of claim 6 or 7, wherein the electric motor disconnect system includes an engagement shaft spring, and the electric motor disconnect system is configured such that the engagement shaft spring biases the engagement shaft toward the clutch engaged configuration.

9. The hybrid-electric propulsion system of claim 8, wherein the electric motor disconnect system includes an input shaft having an axially extending central bore; and
wherein the engagement shaft is received within the central bore; and
wherein a spline arrangement mechanically couples the engagement shaft and the input shaft and allows axial travel of the engagement shaft relative to the input shaft.

10. The hybrid-electric propulsion system of claim 9, wherein the electric motor disconnect system includes a disconnect actuator disposable in a retracted state or in a deployed state; and
wherein in the deployed state the disconnect actuator is configured to cause the engagement shaft to axially translate.

11. The hybrid-electric propulsion system of claim 10, wherein in the deployed state the disconnect actuator engages with a ramp attached to the engagement shaft.

12. The hybrid-electric propulsion system of claim 10 or 11, wherein the disconnect actuator includes a solenoid that is controllable to actuate the disconnect actuator from the retracted state to the deployed state.

13. The hybrid-electric propulsion system of claim 12, further comprising a controller in communication with the electric motor, the electric motor disconnect system, and a non-transitory memory storing instructions, which instructions when executed cause the controller to:
monitor electric motor operation; and
control the disconnect actuator of the electric motor disconnect system to actuate to a deployed state in the event the electric motor operation monitoring identifies an abnormal event occurrence.

14. A hybrid-electric propulsion system for an aircraft, comprising:
a thermal engine;
an electric motor having a motor shaft;
a gearbox having a housing, the gearbox configured to receive a rotational drive input from the electric motor; and
an electric motor disconnect system disposed within the housing of the gearbox;
wherein the electric motor disconnect system is disposable in a connected state, and in the connected state the electric motor is engaged with the gearbox to provide the rotational drive input to thermal engine via the gearbox, and disposable in a disconnected state wherein the electric motor is disengaged from providing the rotational drive input to the thermal engine.

15. The hybrid-electric propulsion system of claim 14, wherein the electric motor disconnect system includes:
a clutch that is disposable in a clutch engaged configuration and a clutch disengaged configuration;
an input shaft having an axially extending central bore; and
an engagement shaft received within the central bore;
wherein the motor shaft of the electric motor and the engagement shaft are connected to the clutch; and
wherein the electric motor disconnect system is configured such that linear translation of the engagement shaft changes the clutch from the clutch engaged configuration to the clutch disengaged configuration,
wherein, optionally, a spline arrangement mechanically couples the engagement shaft and the input shaft and allows axial travel of the engagement shaft relative to the input shaft,
wherein, optionally, the electric motor disconnect system includes a disconnect actuator disposable in a retracted state or in a deployed state, and in the deployed state the disconnect actuator is configured to cause the engagement shaft to axially translate,
wherein, optionally, the thermal engine is a gas turbine engine; and
wherein the gearbox is an accessory gearbox in drive communication with an engine shaft of the gas turbine engine via a tower shaft.
